# EUROPEAN PATENT SPECIFICATION

(11) **EP 2 743 863 B1**
(45) Date of publication and mention of the grant of the patent: **05.02.2020**
(21) Application number: 13195229.3
(22) Date of filing: 02.12.2013
(51) Int. Cl.: G06K 19/00, G07D 7/06

(54) **OPTICAL READER FOR DOCUMENTS WITH PERFORED AND PRINTED ZONES**
LESEAPPARAT FÜR DOKUMENTE MIT GELOCHTER UND GEDRUCKTER STELLE
LECTEUR OPTIQUE POUR DOCUMENTS AVEC ZONES PERFORÉES ET IMPRIMÉS

(30) Priority: 13.12.2012 IT MI20122131
(43) Date of publication of application: 18.06.2014
(73) Proprietor: Bancor SRL, 20129 Milano (MI) (IT)
(72) Inventor: Piazza, Paola, I-20129 Milano (MI) (IT)
(74) Representative: Lampis, Marco

(56) References cited:
- JP-A- S63 163 150
- US-A- 5 751 841
- US-A- 5 966 456
- US-A1- 2007 006 654

## Description

The present invention relates to an innovative optical scanner which allows the reading of printed and/or perforated documents. In particular, the reading may be performed by means of visible or invisible light (UV and IR) technology.

US 2007/006654 discloses a device using ultrasonic waves for detecting internal mechanical characteristics (substantially defects) into the structure of paper sheets, such as banknotes or the like.

WO2011/098803 discloses use of an array of apertures of at least two different shapes or orientations for coding security information in a document.

DE2808552 discloses a strip extending across a document and having at least one edge provided with a non-rectilinear portion shaped to provide coded information.

WO2011/098803 discloses a specific encoding of security elements in holes in a document. The holes forming numbers in the documents are shaped for encoding a security code.

In the commonly known technique, documents are available in which printed areas on the surface thereof are combined with perforated areas, which also contain information.

For example, in the banking field, it is common to have cheques which are endowed with both printed areas containing the serial number of the cheque in alphanumerical characters and/or barcodes, and areas which reproduce the same number by means of holes in the document (which are also called "micro-perforations", since such holes are usually approximately one tenth of a millimetre in size).

The perforated number may have a recognisable format, i.e. simply a set of perforated points arranged in proximity to create the form of alphanumerical characters.

Combining printed and perforated serial numbers can produce a simple security system wherein the printed number matches the perforated number. This prevents fraudulent activities based simply on the use of coloured photocopies of valid cheques.

The said system can also be utilised on other types of documents, such as identity documents, cards, certificates, banknotes, etc.

In the commonly known technique, optical sensors are known which scan the surface of documents to electronically detect and acquire surface printing.

For example, there are well known linear sensors called CISs (Contact Image Sensor), which usually feature a row of light emitters that generate a strip of light which is reflected on the document, and which is flanked by a row of sensors that capture the light reflected off the document in order to acquire a series of points on the documents aligned transversely to the direction of the said document through the sensor.

These devices, however, are unsuitable for detecting the presence of micro-perorations during the reading of a document, since the holes are very small and offer low contrast with respect to the surrounding areas or, even, are not visible to the naked eye (e.g., banknotes), with the result that the CIS is unable to distinguish and detect the hole with certainty. Furthermore, the sensor is unable to distinguish a real hole from merely the image of a hole printed on the surface of the document.

In the commonly known technique, there are also systems known which are for the general detection of holes in surfaces which are in transit under a suitable sensor. These sensors generally utilise a direct lighting system, with a detector on one side of the surface and a lighting device on the opposite side, with the result that the light can reach the sensor solely when a hole passes thereover. These systems, however, are usually utilised to detect the presence/absence of a single hole or a few holes at a time, for example for rating the movement of the surface and/or to enable/disable automatic functions of complex machinery upon the passage of the hole. Furthermore, by nature, these sensor systems do not generally have the necessary resolution for reading perforated alphanumerical codes.

Furthermore, in document scanning machines, both the acquisition speed and the device size are important. Providing such machines with both a reading device for holes and a reading device for printed surfaces would unacceptably increase the size, complexity, and cost of the machine.

The general aim of the present invention is to provide an optical reading device which is relatively simple and reliable, and features reduced dimensions and allows the detection, with certainty, of both printed areas and perforated areas in the electronically read documents.

In view of this aim, we decided to produce, according to the invention, an optical reading device, defined as stated in Claim 1.

A further aim is to provide a method for reading printed and/or perforated documents as stated in Claim 11.

To provide a clearer explanation of the innovative principles of the present invention and the advantages thereof with respect to the commonly known technique, possible exemplifying embodiments in which the said principles are applied will be described below with the help of the accompanying drawings. In the drawings:
- Figure 1 is a schematic perspective view of an optical reader according to the invention;
- Figure 2 is a block diagram of the scanner in Figure 1 with an electronic management system;
- Figures 3 to 5 show block diagrams of the variants of the optical reader produced according to the principles of the present invention.

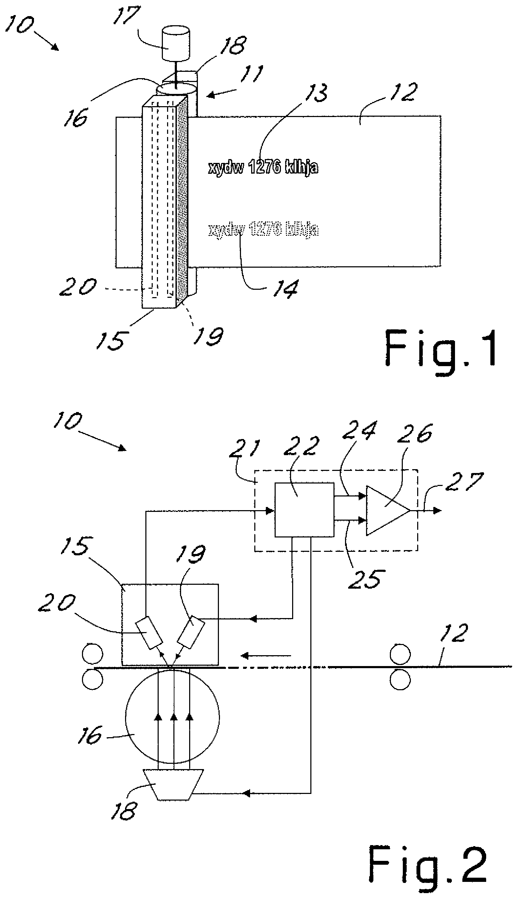

With reference to the figures, Figure 1 shows, schematically, an optical reader as a while denoted by 10, produced according to the invention.

The reader 10 comprises a reading head 11 through which the document 12 to be read is conveyed. Used herein, the term 'document' is intended as an essentially two-dimensional element, such as a sheet, a cheque, an identity card, a card, a banknote, etc., endowed with printed areas 13 and/or perforated areas 14. Furthermore, the document may be rigid or flexible and made of various materials, such as paper, plastic, etc.

The reader 10 will comprise therein known guide systems for the document, which will be advantageously motorised in order to move the said document at a suitable speed through the reading head 11. For example, as will be expressed more clearly below, motorised rollers to pull and/or push the document may be featured.

The reading head 11 comprises a CIS linear reflective sensor 15 positioned to read the surface of the document along a line that is transversal to the direction of movement of the document (for example from right to left in figure 1).

The sensor 15 is of a type essentially known and shall not therefore be described or shown in detail here.

With a frontal position with respect to the sensor 15, on the other side of the path of the movement of the document, advantageously there is a contrast surface to keep the document 12 correctly in contact with the sensor 15. In the embodiment of figures 1 and 2, the surface is created with a pressure roller 16. The said roller is advantageously motorised by means of a suitable electric motor 17 to drag the document at an established speed.

Means of sending light towards the sensor, are arranged in a frontal position with respect to the sensor, on the other side of the path for the movement of the document for lighting the sensor 15 through any holes which may be present in the document.

These means can advantageously feature the lighting device 18. The said lighting device can be positioned on the same side as roller 16 in respect to the passage path of the document 12 and can send light through the roller onto the side of the document that is opposite the printed side which is read by the sensor 15.

As is better shown schematically in figure 2, the sensor 15 comprises inside a row of light emitters 19 and a parallel row of light detectors 20, duly oriented at an angle to the surface of the passing document. The row of emitters 19 (for example a duly shaped lamp, or advantageously a row of light emitters positioned next to each other) generates a strip of light along a line that is transversal to the direction of movement of the document, while the line of detectors 20 detects the corresponding light that is reflected from the surface of the document.

This allows the reading, according to a method that is essentially known, of the printed surface of the document, which with its light and dark areas reflects the light in different ways.

The reading device 10 advantageously comprises an electronic control system 21 (for example made with a known suitable microcontroller duly programmed) that receives the signal coming from the head 15 and interprets the sensor's signals to obtain the corresponding processed images and/or control signal and commands according to the images detected.

Figure 2 clearly shows how according to the invention the detectors 20 in the innovative device can receive both the light sent by the emitters 19 and reflected from the document, and the light emitted by the lighting device 18 when it passes through the holes 14 in the document.

The system 21 can therefore read, by means of a known processing block or circuit 22 and using a single set of relatively high resolution sensors, both the printed and perforated areas of the document.

Advantageously, the control system 21 can also control the emitters 19 and the lighting device 18 to switch them on at different moments, so as to avoid interference between the two types of readings and to distinguish, with certainty, which images are produced by perforation and which are produced by surface print.

To enhance this effect a light with different wavelengths can be used for the backlight and for the reflective lighting device, duly selecting the relevant spectrum of the wavelengths that can be detected by the detectors 20.

The emission wavelengths can be selected from both the visible and invisible spectrum. Preferably, the light in the visible spectrum can be used to detect reflected printed images while invisible spectrum light can be used to detect the holes, and also to detect, if required, other anti-counterfeiting characteristics of the specific document in the ultraviolet or infrared spectrum.

For example, the CIS can be selected to have the emitters in the visible spectrum (in particular for an RGB reflective type detection). The lighting device 18 can be a traditional light source, an infrared light source or an ultraviolet light source. Consequently the CIS detector shall be chosen of a type suitable to detect visible light, ultraviolet or infrared light. The sources can be advantageously made of visible, infrared or ultraviolet LEDs respectively.

In all cases, when the micro-perforated document enters in contact with the CIS sensors a line scan is performed, which then generates the image of the entire document. To obtain the two images corresponding to the printed parts and perforated parts, processing may be performed on each line on the basis of which a first acquisition of the line is achieved with the emitters 19 and the CIS sensors switched on, so as to acquire the normal image, and a second acquisition of the line can be performed with the emitters 19 switched off and the backlight source 18 switched on. In this way two images are generated: a normal image scan and an image that enhances the micro-holes thanks to the backlight source.

In the case of anti-counterfeiting methods the document can comprise a printed code and an associated code in the perforated format. From the two images obtained with the device according to the invention the two codes can be easily obtained and it can be defined whether they are correlated (that is, if the two codes are correctly associated to each other). In doing this, the system is favoured by the fact that the reflective emitters 19 and the lighting device 18 can be switched on and off alternately.

The association between the codes may simply be in the form of two equal alphanumeric codes (for example the repetition of the serial number of a cheque) or two parts of a more complex code or one the control code of the other, etc. A confidence interval may also be foreseen, that is a "similarity" threshold within which the association of the codes must be considered valid.

If the codes are correctly associated, the device can advantageously emit a signal 27 of authenticity of the document that can therefore be accepted.

To extract from the images the codes made of alphanumerical characters, the processing module 22 can foresee known OCR (optical character recognition) functions to obtain the printed code and the perforated code from the two images detected by the sensor. The corresponding digital signals 24 and 25 (for example representations in an appropriate known binary code of the detected alphanumeric strings) can be automatically compared by a comparison module 26 that emits the matching/non-matching signal 27. The said signal 27 can also be a simple Yes/No signal that signals the acceptability or non-acceptability of the document depending on whether the match is positive or not.

For example the OCR recognition of the characters defined by the micro-perforation can be compared with those defined for the print (for example with code-line and OCR-B print). If the result is the same, then the cheque can considered valid. Also in this case a confidence interval can be foreseen, as mentioned above.

In the embodiment of figures 2, to make the light of the lighting device 18 reach the document, roller 16 is permeable to light (for example transparent, semitransparent or translucent), so that the light from the lighting device goes through the roller in the direction of the side of the document. The lighting device 18 can also be fitted inside the actual roller. In this case it is not necessary for the entire section of the roller to be transparent, but it is sufficient that the part between the source light, represented by the lighting device inside the roller, and the external part of the roller is transparent.

If the perforated areas and the printed areas to be detected are in a predetermined position and at a fixed height of the document (that is in the direction of the range of the sensor 20), the lighting device 18 and the emitters 19 can also be envisaged only in the said respective areas. In this case, they can be switched on at the same time and the recognition of the perforated and printed areas is given by the position of the detections along the range of the sensor 20.

In the case of a predetermined position of the perforated and printed areas, for the purpose of signalling a counterfeit attempt it is easier to distinguish the perforated codes and the printed codes than if the perforations are only simulated by print (for example a photocopy of an original perforated document).

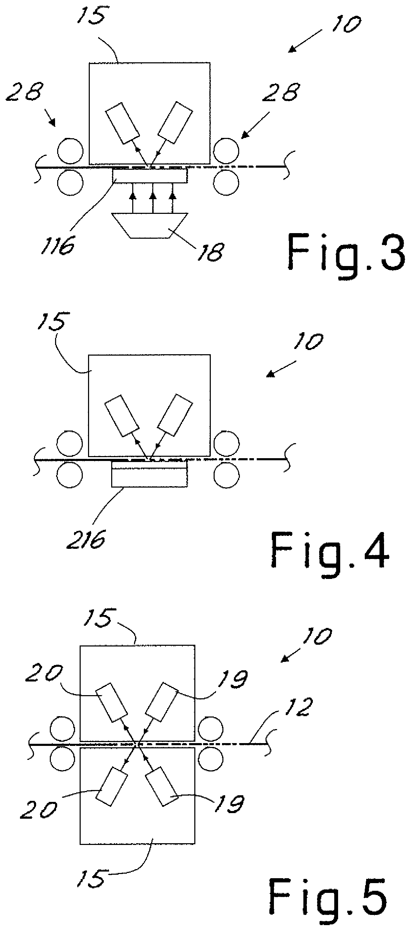

Figure 3 shows a variant of the embodiment of reader 10 where the roller 16 is replaced by a flat contrast surface 116 permeable to light (for example transparent, semitransparent or translucent), behind which the lighting device 18 is positioned. The puling action of the document, which in the first embodiment can be advantageously produced by roller 16, can be achieved by means of one or more pairs of motorised rollers 28 duly arranged along the path that leads the document under the reader head 11. The lighting device can also be easily incorporated in the surface 116.

Figure 4 shows a variant of the embodiment of reader 10 in which the means of sending light comprise a reflective surface 216 (for example a mirror). In this case, it is the light of the emitters 19 that, when reflected from the surface 216 through the holes, is detected by the detector 20. In this case, the possibility of detecting the difference between holes and printed characters may be lost, unless the intensity of light reflected from the mirror surface can be distinguished with certainty from that of the material of the document. In this case a measurement with light intensity threshold can be performed by module 22 to distinguish the two cases, as an expert technician would easily imagine.

If there is the need to read both printed sides of the document, two reader heads as described above for the various embodiments, can be arranged in a staggered manner on the two opposite sides of the document along the path of the document in the reader. Figure 5 however shows a further advantageous variant of the embodiment if the documents have to be read on both sides. This variant features the reader head 11 that comprises two sensors 15 arranged facing the two sides of the document so that the emitters 19 of at least one of the sensors directly illuminate the detection elements 20 of the other sensor.

In this way, when each sensor reads the corresponding printed side of the document, the detectors 20 are illuminated by reflection by their own emitters 19, while when the sensors read the holes, the detectors 20 of at least one sensor (and advantageously both) are illuminated through the holes by the emitters of the other sensor. In other words the emitters of one (or each) sensor embody the means of sending light (that is the lighting device) for the other sensor.

For greeter safety the emitters of the two sensors can be switched on alternately to avoid the detection of false holes that are only printed on both sides of the document.

If there is the need to read both sides of the document, the embodiment in figure 5 allows significant space and cost savings compared to the use of two single reader heads, of the previous embodiments, arranged on the two sides of the document.

At this point it is clear how the aims set are achieved. With a reading device according to the invention both the printed parts and the perforated parts of a document can be detected in a fast, safe and relatively inexpensive way. The use of backlighting verifies with physical certainty the presence of the micro-perforation on the document thanks to the light that passes through the micro-perforations and is received by the CIS. In fact, if the document does not feature the micro-perforations there is no passage of direct light and no detection by the CIS of the backlight emitted by the lighting device behind the document. Furthermore the comparison of the direct and reflected light avoids false detections.

Obviously, the above mentioned description of an embodiment that applies the innovative principles of this invention is described as mere example of the said innovative principles and must not therefore be considered as a limitation of the patent claimed herein.

For example more complex paths of the document, other than a simple straight line, can be imagined according to specific needs. Furthermore, the document guiding and pulling means can be of different types, as can be easily imagined by an expert technician. Furthermore, the movement of the document with respect to the reader head is to be understood as movement between the head and the surface of the document. For example, if preferred, the document can be kept fixed and the head can slide over it.

## Claims

1. Method for checking the authenticity of documents, by means of optical reading both printed areas and perforated areas of the documents and detecting of printed codes and perforated codes in such printed areas and perforated areas on the documents, comprising the step of:
- providing an optical reading device equipped with at least one contact image sensor, abbreviated CIS (15), comprising light emitters (19) and detectors (20) and configured to be positioned at one surface of the printed and possibly perforated document;
- moving the document along a direction which is trasversal to the CIS sensor so that the CIS sensor scans, along a line transversal to the direction of movement of the document, one surface of the document;
- providing the optical reading device with means (18, 16, 116, 216, 19) for sending light towards the sensor, arranged in a frontal position with respect to the sensor (15) on the other side of the document so that this means are lighting the sensor (15) through any perforated areas which may be present in the document, and the same sensor CIS detecting both printed areas, by means of reflection, and perforated areas, by means of the light sent through perforated areas, in the document;
- recognising the perforated areas on the basis of the lighting of the sensor (15) with the light sent to the sensor by the said means of sending light;
- recognising the printed areas on the basis of the lighting of the sensor with the light of the emitters (19) and reflected by the document towards the sensor;
- extracting printed codes (24) and perforated codes (25) respectively from the recognised printed areas and perforated areas using processing means,
wherein the means for sending light consist of a lighting device that emits light towards the sensor and the emitters and the lighting device are switched on by processing means alternately for each of the said transversal line,
wherein the holes in the document form at least a perforated code and the prints form at least a printed code; upon the detection by the sensor of an first image with the light emitted by the means of sending light, the first image representing an image of the perforated code and upon the detection by the sensor of a second image with the light emitted by the emitters, the second image representing an image of the printed code, and
wherein the processing means extracting the printed code and the perforated code from the first and second image and comparing said extracted printed code and perforated code with each other and a signal of acceptance of the document is generated by the processing means if said extracted printed code and perforated code are decided as correctly associated to each other.

2. Method according to claim 1, wherein the emitters emit a light of a first wavelength and the means of sending light consists of a lighting device that emits light towards the sensor at a second wavelength.

3. Optical reading device performing the method according to claim 1 or 2, comprising:
- a contact image sensor, abbreviated CIS (15) comprising light emitters (19) and detectors (20) and positioned at one surface of the printed and possibly perforated document in order to scan, along a line transversal to the direction of movement of the document, one surface of the document;
- means of sending light (18, 16, 116, 216, 19) towards the sensor, arranged in a frontal position with respect to the sensor (15) on the other surface of the document, for lighting the sensor (15) through any perforated areas which may be present in the document; the same sensor CIS being adapted to detect both printed, by means of reflection, and perforated areas, by means of the light sent through perforated areas, in the document;
- processing means configured to receive signals from the sensor (15) and to obtain images corresponding to the perforated areas when present and to the printed areas and to extract printed codes (24) and perforated codes (25) from said images; said means of sending light comprising a lighting device (18) that emits light towards the sensor (15);
**characterised in that** the processing means are connected to the lighting device (18) and to the emitters (19) to switch them on alternately for each of said transversal line, and **in that** the processing means (21) comprise a module (22) for the extraction of printed and perforated codes (24, 25) from the images obtained by the sensor (15) and a module (26) that compares the said codes for the emission of a signal (27) that signals whether the codes match or not.

4. Device according to claim 3, **characterised by** the fact that between the sensor (15) and the lighting device (18) there is a surface (16, 116), which is permeable to light that embodies a contrast surface to keep the document adherent to the sensor in front of which it is moved.

5. Device according to claim 4, **characterised in that** the surface permeable to light is in the shape of a roller (16) to slide the document.

6. Device according to claim 4, **characterised in that** the surface permeable to light is in the shape of a flat surface (116) to slide the document.

7. Device according to claim 3, **characterised by** the fact that the said means of sending light comprise a reflective surface (216) that reflects towards the detectors (20) the light emitted by the emitters (19).

8. Device according to claim 3, **characterised in that** it comprises a second CIS sensor (15) that comprises light emitters (19) and detectors (20) and positioned, on the other side of the path for the movement of a document with respect to the sensor, for reading, by means of reflection, the other side of the document, the emitters (19) of at least one of the two sensors (15) constituting the said means of sending light towards the other sensor (15).

9. Device according to claim 3, **characterised in that** the lighting device (18) and the emitters (19) emit light at different wavelengths.

## Patentansprüche

1. Verfahren zum Überprüfen der Authentizität von Dokumenten, mittels optischen Lesens sowohl bedruckter Flächen als auch perforierter Flächen der Dokumente und Erfassen der aufgedruckten Codes und perforierten Codes, derart dass bedruckte Flächen und perforierte Flächen auf den Dokumenten, die Schritte umfassen:
Bereitstellen eines optischen Lesegerätes, das mit mindestens einem Kontakt-Bildsensor, abgekürzt CIS (15), versehen ist, welches Licht-Emitter (19) und -Detektoren (20) umfasst und ausgestaltet ist, an einer Oberfläche des bedruckten und wahlweise perforierten Dokumentes angeordnet zu sein;
Bewegen des Dokumentes entlang einer Richtung, die transversal zu dem CIS-Sensor verläuft, so dass der CIS-Sensor entlang einer Transversallinie zu der Bewegungsrichtung des Dokumentes eine Oberfläche des Dokumentes scannt;
Versehen des optisches Lesegerätes mit Mitteln (18, 16, 116, 216, 19) zum Aussenden von Licht zu dem Sensor, die in einer frontalen Position in Bezug zu dem Sensor (15) auf der anderen Seite des Dokumentes angeordnet sind, so dass diese Mittel den Sensor (15) durch jede perforierte Fläche beleuchten, die in dem Dokument vorliegt, und
Erfassen sowohl bedruckter Fläche mittels Reflektion, als auch perforierter Flächen mittels des durch perforierte Flächen gesendeten Lichtes, in dem Dokument durch den gleichen CIS-Sensor;
Erkennen der perforierten Flächen auf der Basis der Beleuchtung des Sensors (15) mit dem durch die Mittel zum Aussenden von Licht zu dem Sensor gesendeten Licht;
Erkennen der bedruckten Flächen auf der Basis der Beleuchtung des Sensors mit dem aus den Emittern (19) und durch das Dokument zu dem Sensor reflektierten Licht;
entsprechendes Extrahieren aufgedruckter Codes (24) und perforierter Codes (25) von den erkannten bedruckten und perforierten Flächen unter Verwendung von Verarbeitungsmitteln,
worin die Mittel zum Aussenden von Licht aus einer Beleuchtungseinrichtung bestehen, die Licht zu dem Sensor emittiert und wobei die Emitter und die Beleuchtungseinrichtung durch Verarbeitungsmittel abwechselnd für jede der Transversallinien angeschaltet werden,
worin die Löcher in dem Dokument mindestens einen perforierten Code ausbilden und die Aufdrücke mindestens einen aufgedruckten Code ausbilden; worin nach der Erfassung eines ersten Bildes durch den Sensor mit dem durch die Mittel zum Aussenden von Licht emittierten Licht, das erste Bild ein Bild des perforierten Codes repräsentiert und nach der Erfassung eines zweiten Bildes durch den Sensor mit dem durch die Emitter emittierten Licht, das zweite Bild ein Bild des aufgedruckten Codes repräsentiert, und
wobei die Verarbeitungsmittel den aufgedruckten Code und den perforierten Code aus dem ersten und zweiten Bild extrahieren und den extrahierten aufgedruckten Code und den perforierten Code miteinander vergleichen und wobei durch die Verarbeitungsmittel ein Annahmesignal des Dokumentes erzeugt wird, wenn der extrahierte aufgedruckte Code und perforierte Code als korrekt zueinander passend bestimmt werden.

2. Verfahren nach Anspruch 1, wobei die Emitter ein Licht einer ersten Wellenlänge emittieren und die Mittel zum Aussenden von Licht aus einer Beleuchtungseinrichtung bestehen, die Licht mit einer zweiten Wellenlänge zu dem Sensor emittieren.

3. Optisches Lesegerät zum Durchführen des Verfahrens nach Anspruch 1 oder 2, welches umfasst:
einen Kontakt-Bildsensor, abgekürzt CIS (15), der Licht-Emitter (19) und
- Detektoren (20) umfasst und an einer Oberfläche des bedruckten und wahlweise perforierten Dokumentes angeordnet ist, um entlang einer Transversallinie zu der Bewegungsrichtung des Dokumentes eine Oberfläche des Dokumentes zu scannen;
Mittel zum Aussenden von Licht (18, 16, 116, 216, 19) zu dem Sensor, die in einer frontalen Position in Bezug zu dem Sensor (15) auf der anderen Oberfläche des Dokumentes angeordnet sind, zum Beleuchten des Sensors (15) durch jede perforierte Fläche, die in dem Dokument vorliegt; worin der gleiche CIS-Sensor angepasst ist, sowohl mittels Reflektion bedruckte als auch mittels des durch perforierte Flächen gesendeten Lichtes perforierte Flächen in dem Dokument zu erfassen;
Verarbeitungsmittel, die ausgestaltet sind, Signale von dem Sensor (15) zu empfangen und Bilder zu erhalten, die den bedruckten Flächen und, wenn diese vorliegen, den perforierten Flächen entsprechen, und um aufgedruckte Codes (24) und perforierte Codes (25) aus den Bildern zu extrahieren; worin die Mittel zum Aussenden von Licht eine Beleuchtungseinrichtung (18) umfassen, die Licht zu dem Sensor (15) emittiert;
**dadurch gekennzeichnet, dass** die Verarbeitungsmittel mit der Beleuchtungseinrichtung (18) und mit den Emittern (19) verbunden sind, um diese abwechselnd für jede der Transversallinien anzuschalten, und dadurch dass das Verarbeitungsmittel (21) ein Modul (22) zur Extraktion der aufgedruckten und perforierten Codes (24, 25) aus den durch den Sensor (15) erhaltenen Bildern und ein Modul (26) umfasst, das die Codes für die Emission eines Signals (27) vergleicht, das signalisiert, ob die Codes passen oder nicht.

4. Gerät nach Anspruch 3, **dadurch gekennzeichnet, dass** sich zwischen dem Sensor (15) und der Beleuchtungseinrichtung (18) eine für Licht durchlässige Oberfläche (16, 116), die als eine Kontrast-Oberfläche ausgeführt ist, befindet, um das Dokument an dem Sensor haftend zu halten, vor dem es her bewegt wird.

5. Gerät nach Anspruch 4, **dadurch gekennzeichnet, dass** die für Licht durchlässige Oberfläche, die Form einer Rolle (16) aufweist, um das Dokument über sich gleiten zu lassen.

6. Gerät nach Anspruch 4, **dadurch gekennzeichnet, dass** die für Licht durchlässige Oberfläche die Form einer flachen Oberfläche (116) aufweist, um das Dokument über sich gleiten zu lassen.

7. Gerät nach Anspruch 3, **dadurch gekennzeichnet, dass** die Mittel zum Aussenden von Licht eine reflektierende Oberfläche (216) umfassen, die das durch die Emitter (19) emittierte Licht zu den Detektoren (20) reflektiert.

8. Gerät nach Anspruch 3, **dadurch gekennzeichnet, dass** dieses einen zweiten CIS-Sensor (15) umfasst, der Licht-Emitter (19) und Detektoren (20) umfasst, und für die Bewegung eines Dokumentes in Bezug zu dem Sensor, zum Lesen der anderen Seite des Dokumentes mittels Reflektion auf der anderen Seite des Pfades angeordnet ist, worin die Emitter (19) mindestens eines der zwei Sensoren (15) die Mittel zum Aussenden von Licht zu dem anderen Sensor (15) bilden.

9. Gerät nach Anspruch 3, **dadurch gekennzeichnet, dass** die Beleuchtungseinrichtung (18) und die Emitter (19) Licht mit verschiedenen Wellenlängen emittieren.

## Revendications

1. Procédé de vérification de l'authenticité de documents, au moyen d'une lecture optique à la fois de zones imprimées et de zones perforées des documents et d'une détection de codes imprimés et de codes perforés dans de telles zones imprimées et zones perforées sur les documents, comprenant les étapes ci-dessous consistant à :
- fournir un dispositif de lecture optique équipé d'au moins un capteur d'image à contact, « CIS » en abrégé (15), comprenant des émetteurs de lumière (19) et des détecteurs (20), et configuré de manière à être positionné sur une surface du document imprimé et éventuellement perforé ;
- déplacer le document le long d'une direction qui est transversale au capteur CIS de sorte que le capteur CIS balaye, le long d'une ligne transversale à la direction de déplacement du document, une surface du document ;
- fournir, au dispositif de lecture optique, des moyens (18, 16, 116, 216, 19) pour émettre de la lumière vers le capteur, agencés dans une position frontale par rapport au capteur (15) de l'autre côté du document, de sorte que ces moyens éclairent le capteur (15) à travers des quelconques zones perforées qui peuvent être présentes dans le document, et que le même capteur CIS détecte tant les zones imprimées, au moyen d'une réflexion, que les zones perforées, au moyen de la lumière émise à travers les zones perforées, dans le document ;
- reconnaître les zones perforées sur la base de l'éclairage du capteur (15) par la lumière émise vers le capteur par lesdits moyens d'émission de lumière ;
- reconnaître les zones imprimées sur la base de l'éclairage du capteur par la lumière des émetteurs (19) et qui est réfléchi par le document vers le capteur ;
- extraire des codes imprimés (24) et des codes perforés (25), respectivement, des zones imprimées reconnues et des zones perforées reconnues, en utilisant des moyens de traitement ;
dans lequel les moyens d'émission de lumière consistent en un dispositif d'éclairage qui émet de la lumière vers le capteur et les émetteurs, et dans lequel le dispositif d'éclairage est mis sous tension par des moyens de traitement, par alternance, pour chacune desdites lignes transversales ;
dans lequel les trous dans le document forment au moins un code perforé et les impressions forment au moins un code imprimé ; dans lequel, suite à la détection, par le capteur, d'une première image, au moyen de la lumière émise par les moyens d'émission de lumière, la première image représente une image du code perforé, et suite à la détection, par le capteur, d'une seconde image, au moyen de la lumière émise par les émetteurs, la seconde image représente une image du code imprimé ; et
dans lequel les moyens de traitement extraient le code imprimé et le code perforé de la première image et de la seconde image, et comparent ledit code imprimé extrait audit code perforé extrait, et un signal d'acceptation du document est généré par les moyens de traitement si ledit code imprimé extrait et ledit code perforé extrait sont considérés comme correctement associés l'un à l'autre.

2. Procédé selon la revendication 1, dans lequel les émetteurs émettent une lumière d'une première longueur d'onde et les moyens d'émission de lumière consistent en un dispositif d'éclairage qui émet de la lumière vers le capteur à une seconde longueur d'onde.

3. Dispositif de lecture optique mettant en œuvre le procédé selon la revendication 1 ou 2, comprenant :
- un capteur d'image à contact, « CIS » en abrégé (15), comprenant des émetteurs de lumière (19) et des détecteurs (20), et positionné sur une surface du document imprimé et éventuellement perforé afin de balayer, le long d'une ligne transversale à la direction de déplacement du document, une surface du document ;
- des moyens pour émettre de la lumière (18, 16, 116, 216, 19) vers le capteur, agencés dans une position frontale par rapport au capteur (15) sur l'autre surface du document, en vue d'éclairer le capteur (15) à travers des quelconques zones perforées qui peuvent être présentes dans le document ; dans lequel le même capteur CIS est apte à détecter tant les zones imprimées, au moyen d'une réflexion, que les zones perforées, au moyen de la lumière émise à travers les zones perforées, dans le document ;
- des moyens de traitement configurés de manière à recevoir des signaux en provenance du capteur (15) et à obtenir des images correspondant aux zones perforées, lorsqu'elles sont présentes, et aux zones imprimées, et à extraire des codes imprimés (24) et des codes perforés (25) desdites images ; lesdits moyens d'émission de lumière comprenant un dispositif d'éclairage (18) qui émet de la lumière vers le capteur (15) ;
**caractérisé en ce que** les moyens de traitement sont connectés au dispositif d'éclairage (18) et aux émetteurs (19) en vue de les mettre sous tension, par alternance, pour chacune desdites lignes transversales, et **en ce que** les moyens de traitement (21) comprennent un module (22) destiné à extraire des codes imprimés et des codes perforés (24, 25) des images obtenues par le capteur (15), et un module (26) qui compare lesdits codes pour l'émission d'un signal (27) qui signale si les codes correspondent ou non.

4. Dispositif selon la revendication 3, **caractérisé en ce que**, entre le capteur (15) et le dispositif d'éclairage (18), se situe une surface (16, 116), perméable à la lumière, qui intègre une surface de contraste pour permettre le maintien par adhérence du document au capteur devant lequel il est déplacé.

5. Dispositif selon la revendication 4, **caractérisé en ce que** la surface perméable à la lumière se présente sous la forme d'un rouleau (16) destiné à faire coulisser le document.

6. Dispositif selon la revendication 4, **caractérisé en ce que** la surface perméable à la lumière se présente sous la forme d'une surface plane (116) destinée à faire coulisser le document.

7. Dispositif selon la revendication 3, **caractérisé en ce que** lesdits moyens d'émission de lumière comprennent une surface réfléchissante (216) qui réfléchit, vers les détecteurs (20), la lumière émise par les émetteurs (19).

8. Dispositif selon la revendication 3, **caractérisé en ce qu'**il comprend un second capteur CIS (15) qui comprend des émetteurs de lumière (19) et des détecteurs (20) et qui est positionné, de l'autre côté du trajet pour le déplacement d'un document par rapport au capteur, de manière à lire, au moyen d'une réflexion, l'autre côté du document, dans lequel les émetteurs (19) d'au moins l'un des deux capteurs (15) constituent lesdits moyens d'émission de lumière vers l'autre capteur (15).

9. Dispositif selon la revendication 3, **caractérisé en ce que** le dispositif d'éclairage (18) et les émetteurs (19) émettent de la lumière à différentes longueurs d'onde.
